# EUROPEAN PATENT APPLICATION

(11) **EP 1 378 721 A1**
(43) Date of publication of application: **07.01.2004**
(21) Application number: 02014815.1
(22) Date of filing: 02.07.2002
(51) Int. Cl.: G01C 21/26

(54) **A method and system for estimating an expected travel time**

(71) Applicant: SIEMENS AKTIENGESELLSCHAFT, 80333 München (DE)
(72) Inventor: Hendriks, Antonius Johannes, 5509 NR Veldhoven (NL); Lim, Karin, 5673 PA Nuenen (NL)

(57) **Abstract**

In a motor vehicle navigation a remaining overall expected travel time/arrival time of a route to a destination (28) is estimated as follows: first, by determining an actual vehicle position (52), and therefrom a first expected travel time (54) along a first actual segment (20) unto a predetermined position (22) along the route; second, by determining a second expected travel time (60) along one or more further segments (24, 26) of the route to the destination (28), on the basis of various static cost metrics respectively associated to one or more further segments; third, by and adding the first and second expected travel times (62) to generate the overall expected travel time/arrival time for presentation to a user person.

In particular, the second expected travel time is amended (58) on the basis of a non-uniform instance profile associated to the driving by the vehicle along the one or more further segments (24, 26).

## Description

### A method and system for estimating an expected travel time

The invention relates to a method for in a motor vehicle navigation system estimating a remaining overall expected travel time/arrival time of a route to a destination, said method comprising the steps of:
- determining an actual vehicle position and therefrom a first expected travel time along a first actual segment unto a predetermined position along said route;
- determining a second expected travel time along one or more further segments of said route to said destination, on the basis of various static cost metrics respectively associated to said one or more further segments;
- and adding said first and second expected travel times to generate said overall expected travel time/arrival time for presentation to a user person.

The route itself may have been planned by the navigation system, but this is not a prerequisite, inasmuch as the user may have pre-specified the route completely. The actual vehicle speed may generally be used as a good measure for calculating the travel time along the actual route segment, but this is not a restriction. Travel time along subsequent segments of the planned route may take into account the character of the segments in question, legal speed limits, and other data. A prior art system has been disclosed in US Patent 6,285,950 B1 to Alpine Electronics, Inc. In this prior art, the first expected travel time is estimated indeed on the basis of the actual vehicle speed, whereas the second expected travel time is found solely on the basis of the static aspects of the route that should be taken.

Now, the present inventors have recognized that this admittedly straightforward procedure tends to overlook multiple corrections that could be made on the basis of a non-uniform instance profile with respect to one or more parameters associated to the various subsequent segments. A first such aspect is that certain drivers and/or certain vehicle types tend to go or happen to go at quite a different pace from others; this may in fact be determined from the actual speed, or rather from a historical data base regarding the particular driver person and/or vehicle type. Even age or gender of the driver may be used as a controlling item. Another example is that certain speed limits are waived during slack hours, traffic jams are more liable to occur during rush hours, as opposed from weekends, and so on. Also here, the actual situation may be combined with historical data. Various such aspects promise to greatly enhance the accuracy of the calculated arrival time, even at a relatively great distance from the destination.

In consequence, amongst other things, it is an object of the present invention to take into account such corrections or amendments to a non-uniform instance profile through dynamically variable parameter values and/or historical data for rendering the calculations more accurate in view of actual situations that may be found applicable.

Now therefore, according to one of its aspects the invention is characterized in that said second expected travel time is amended on the basis of a non-uniform instance profile associated to the driving by the vehicle along said one or more further segments.

According to another aspect the invention is preferably characterized in that a first dynamically variable parameter of said instance profile takes into account a predictable or actually signaled situation pertaining to the actual driver person.

Said method according to the invention may advantageously be characterized in that a second dynamically variable parameter of said instance profile takes into account a time-of-day, time-of-week, day-of-year, etcetera, and/or in that a third dynamically variable parameter of said instance profile takes into account an actual speed of the vehicle along said first segment, and/or in that a fourth dynamically variable parameter of said instance profile takes into account a predictable or actually signaled situation pertaining to said one or more further segments, or to a combination thereof with the actual driver person.

According to a further aspect of the invention, one or more said dynamically variable parameters as pertaining to a particular segment are taken into account regarding one or more other segments.

The invention also relates to a system being arranged for implementing a method as claimed in Claim 1, and to a motor vehicle comprising a system as claimed in Claim 7 and being arranged for implementing a method as claimed in Claim 1.

These and further aspects and advantages of the invention will be discussed more in detail hereinafter with reference to the disclosure of preferred embodiments, and in particular with reference to the appended Figures that show:
- Figure 1,: a schematic diagram of an actual route and pertaining to an associated travel time/arrival time estimate therefor;
- Figure 2,: a flow chart of the operations of a system or method according to a preferred embodiment of the present invention;
- Figure 3,: a motor vehicle encompassing a system according to the present invention.

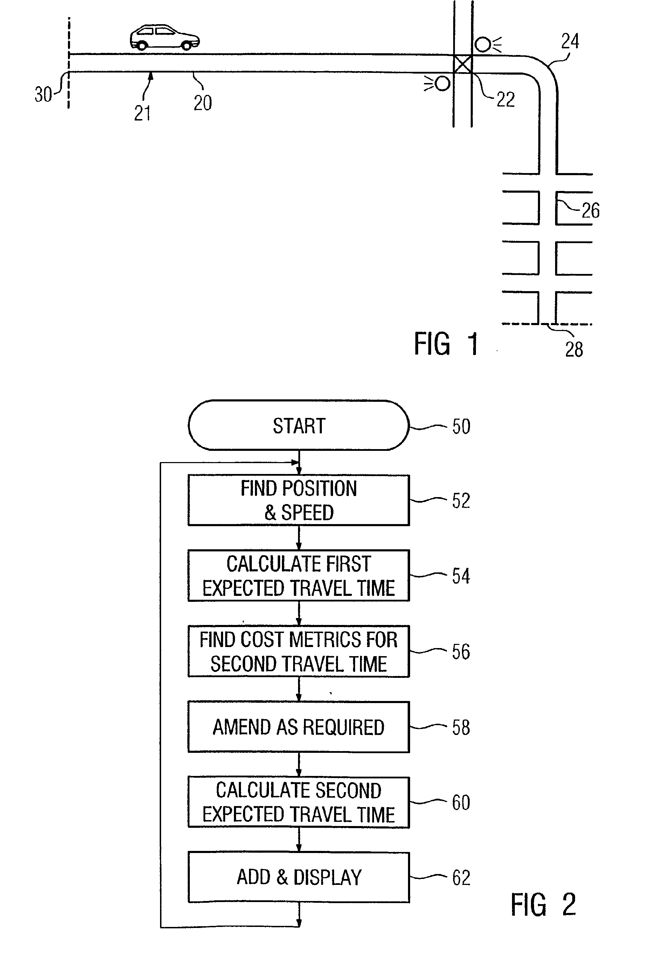

Figure 1 illustrates a schematic diagram of an actually planned route and associated travel estimates therefor. As shown, the route consists of three segments 20, 24, 26. The actual vehicle position is at arrow 21 somewhere on segment 20. Furthermore as shown, there is a traffic light at junction 22, segment 24 is curved, and segment 26 has numerous intersections. The assumed destination is at 28. Now, for determining the travel time/instant of arrival, the system measures the actual vehicle speed, or an average thereof taken over an interval of, say, one or a few minutes. Furthermore, the distance from actual position 21 to the end 22 of segment 20, divided by such actual speed gives a first expected travel time, under the assumption that the driver will maintain vehicle speed at a constant value.

Next, the travel time for the one or more subsequent segments is determined as follows from cost metrics respectively associated to such further segments. Such cost metric may be expressed in a standard travel time or delay value for the associated segment. Now, the traffic light at position 22 is accounted at a certain delay value, that may have been determined under standard conditions such as pertaining to average traffic density, a standard length of the traffic light cycle, and other appropriate parameters. Next, the delay in question is amended for one or more of the following dynamic variations: actually measured traffic density at location 22, predicted traffic density at location 22 that may vary according to time of day, day of week, special holidays, and the like, the actual functionality of the traffic light, such as the actually programmed length of the light cycle, and the actual functionality state of the traffic light, such as programmed on/off, or even breakdown. Moreover, the traffic light may be programmed on the basis of actual traffic density or other conditions. Such data could be generally available or even be acquired by broadcast from an appropriate source.

Next, segment 24 is accounted at a certain delay value, just like the traffic light at position 22. Again, this delay may be amended for one or more of the following conditions: actual or predicted traffic density, actual wheather conditions, such as night, rainstorm or frost, that would presumably lead to a lower speed, or actual vehicle speed at position 20 that could be taken as an indication of the driver's expected speed on the next segment. For example, if the standard speed along segment 20 is 120 kms/hr, but the driver actually goes at 140 kms/hr, the driver's estimated speed along segment 24 can also be expected to be somewhat higher than the standard speed for the latter segment, so that a correction could be made. Another situation would be where two segments of motor way were separated from each other by a ferry, but where the system would estimate the speed on the second motor way segment from the speed actually kept on the first such segment. Another possibility is to take historical data into account, for example previous speed values maintained by the same driver person along the segment in question, or even on other segments of the same road class or character. In fact, such historical data could also be used to determine the travel time from location 21 to location 22, either alone, or in combination with the measured speed at location 21. Another case in point is where the driver would always buy coffee at a certain location. Still another situation is the board computer signalling that fuel is running low, so that a refueling stop were necessary at some location, either planned by the system or selected by the driver.

Next, segment 26 is accounted at a certain delay value, just like the traffic light at position 22. Again, this delay may be amended for one or more of the following conditions: actual or estimated traffic conditions and legal restrictions, such as a maximum speed limit of 50 kms/hr, that may even be variable for certain hours or days.

Figure 2 illustrates a flow chart of the operations of a system or method according to a preferred embodiment of the present invention. In block 50, the operation commences by assigning the necessary hardware and software facilities; also, the route to be followed is calculated along conventional procedures that by themselves are irrelevant for the present invention. In block 52, the system determines the actual vehicle position 21 and actual speed, such as by GPS, odometer differentiation or other conventional facilities. In block 54 the position and speed found are used to calculate the first expected travel time unto position 22. In block 56, the various cost metrics or expected delay values for the one or more subsequent segments are looked up from one or more appropriate prestored tables. In block 58, these cost metrics are amended inasmuch as required, as has been discussed with reference to Figure 1. In block 60, the amended cost metrics are summed to produce a second expected travel time from point 22 unto destination 28 in Figure 1. In block 62, the first and second expected travel times are summed and displayed to a user, either as they are, or as translated to an expected time-of-arrival at position 28.

The flow chart of Figure 2 has been simplified to a certain degree, such as for not comprising a termination feature, that may be effected by shutting down the overall vehicle system, for deviating from the planned route, and for other tasks that could be executed by the vehicle system in some kind of multiprocessing organization. Furthermore, as discussed earlier, the travel time along the actual road segment between locations 21 and 22 could be calculated in the same manner as for the further segments other than through straightforward dividing the distance by actual speed.

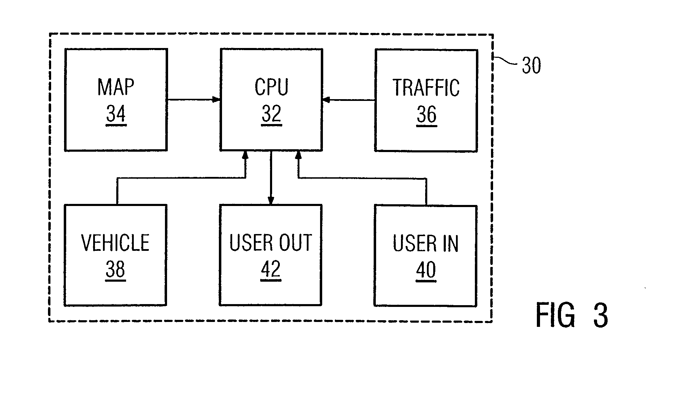

Figure 3 illustrates a schematic of a motor vehicle (30) according to the present invention. For brevity, the various systems and subsystems of the motor vehicle 30 have only been shown as blocks. The processing is generally effected in CPU 32, that accesses sources of map information 34, traffic information 36, and vehicle information 40. Part of these sources will be static, but part thereof may be dynamic, such as in particular pertaining to user input signals, the actual vehicle position, and varying traffic information that may be provided as broadcast codes. Further dynamic variations or amendments to the various parameters could be implemented as recited with reference to the disclosure of Figure 1. After calculating the relevant route, the relevant user traveling indications, inclusive an expected travel time/time of arrival, may be outputted in the form of visual display, speech or other manners in block 42.

Now, the invention has been disclosed with reference to the Figures in connection with the disclosure of preferred embodiments. However, persons skilled in the art will readily recognize various amendments, modifications, and combinations. Therefore, the above disclosure should not be considered as limitative, but rather illustrative, and the due scope of the present invention should be determined from the scope of the Claims appended hereto.

Generally, the present invention allows to make an improved estimate on the basis of four different classes of cost metrics:
1. universal-static cost metrics
2. universal-time_dependent cost metrics
3. personalized individual cost metrics, that may express individual preferences, such as in a fast traffic, low density situation
4. personalized-flock-behaviour, wherein the driver can no longer express such individual preference through slow traffic and/or a high density situation. In particular, the last two categories could be time-dependent, as being based on how the driver profile is constructed.

## Claims

1. A method for in a motor vehicle navigation system estimating a remaining overall expected travel time/arrival time of a route to a destination (28), said method comprising the steps of:
- determining an actual vehicle position (52), and therefrom a first expected travel time (54) along a first actual segment (20) unto a predetermined position (22) along said route;
- determining a second expected travel time (60) along one or more further segments (24, 26) of said route to said destination (28), on the basis of various static cost metrics respectively associated to said one or more further segments;
- and adding said first and second expected travel times (62) to generate said overall expected travel time/arrival time for presentation to a user person,
- said method being **characterized in that** said second expected travel time is amended (58) on the basis of a non-uniform instance profile associated to the driving by the vehicle along said one or more further segments (24, 26).

2. A method as claimed in Claim 1, being **characterized in that** a first dynamically variable parameter of said instance profile takes into account a predictable or actually signaled situation pertaining to the actual driver person.

3. A method as claimed in Claim 1, being **characterized in that** a second dynamically variable parameter of said instance profile takes into account a time-of-day, time-of-week, day-of-year, etcetera.

4. A method as claimed in Claim 1, being **characterized in that** a third dynamically variable parameter of said instance profile takes into account an actual speed of the vehicle along said first segment (20).

5. A method as claimed in Claim 1, being **characterized in that** a fourth dynamically variable parameter of said instance profile takes into account a predictable or actually signaled situation pertaining to said one or more further segments, or to a combination thereof with the actual driver person.

6. A method as claimed in Claim 5, being **characterized in that** one or more said dynamically variable parameters as pertaining to a particular segment are taken in to account regarding one or more other segments.

7. A system being arranged for implementing a method as claimed in Claim 1.

8. A system as claimed in Claim 7, being **characterized in that** said route is planned from an actual vehicle position to a prespecified destination.

9. A motor vehicle comprising a system as claimed in Claim 7 and being arranged for implementing a method as claimed in Claim 1.
